# EUROPEAN PATENT APPLICATION

(11) **EP 3 476 455 A1**
(43) Date of publication of application: **01.05.2019**
(21) Application number: 17820161.2
(22) Date of filing: 27.06.2017
(51) Int. Cl.: B01D 39/16, D04H 1/435, D04H 1/4382, D04H 1/728

(54) **FILTER MEDIUM AND MANUFACTURING METHOD THEREFOR**

(30) Priority: 28.06.2016 JP 2016127882
(71) Applicant: JNC Corporation, Chiyoda-ku Tokyo 100-8105 (JP); JNC Fibers Corporation, Tokyo 100-0004 (JP)
(72) Inventor: UMEBAYASHI You, Moriyama-shi Shiga 524-0001 (JP); MAEDA Noriko, Moriyama-shi Shiga 524-0001 (JP); HIRAMOTO Shimpei, Moriyama-shi Shiga 524-0001 (JP)
(74) Representative: Becker Kurig Straus
(86) International application number: PCT/JP2017/023599
(87) International publication number: WO 2018/003807

(57) **Abstract**

The present invention addresses the problem of providing a filter medium that has a high dust capturing efficiency and a low pressure loss. The present invention is a filter medium that contains electrostatically-spun ultrathin fibers and that is characterized in that the ultrathin fibers contain multiple ester bonds in a molecule thereof. It is preferable that the average fiber diameter of the ultrathin fibers fall within a range of 10-5000 nm, and that the ultrathin fibers are formed of polylactic acid, polyethylene terephthalate, polymethyl methacrylate or polycarbonate. In addition, provided is a method for manufacturing a filter-medium fibrous structure, the method including a step for preparing a spinning solution in which a resin that contains multiple ester bonds in a molecule thereof is dispersed or dissolved in a solvent, and a step for obtaining a fibrous structure containing the ultrathin fibers by performing electrostatic spinning by using said spinning solution.

## Description

### Technical Field

The invention relates to a filter medium produced by an electrospinning method.

### Background Art

As an air filter medium for removing fine dust such as pollen and particulate matter, a great number of sheets each made of a nonwoven fabric have been so far used. Such a filter medium is required to have performance of collecting dust with high efficiency and low pressure drop indicating that resistance when a fluid passes through the filter medium is low. Such a method of obtaining the filter medium with high efficiency and low pressure drop has been so far adopted as a method of physically improving collection efficiency by a dense matrix body formed of fibers having a significantly small diameter, or a method of improving the collection efficiency by applying electret treatment to the filter medium to electrically attract the dust.

As a method of producing the fibers having the significantly small diameter, an electrospinning method is known. In a general electrospinning method, a spinning solution in which a polymer is dissolved is jetted from a leading end of a jet needle made of metal, and simultaneously a high voltage is applied thereto to form a fibrous aggregate toward a surface of a collecting electrode grounded. A sheet made of a nonwoven fabric formed of significantly small fibers having a diameter of several tens of nanometers to several hundreds of nanometers can be obtained by using such a method, and studies have been made on application of the sheet made of an electrospun nonwoven fabric to the filter medium. Patent literature No. 1 proposes a filtering material including a layer of an aggregate of ultrafine fibers having a mean fiber diameter of 0.01 micrometer or more and less than 0.5 micrometer, and a layer of an aggregate of fine fibers having a mean fiber diameter of 0.5 micrometer or more and 5 micrometers or less, both being produced by an electrospinning method. Such a filter medium including the layer of the ultrafine fibers can form the dense matrix body to improve the collection efficiency, in which a main collection mechanism depends on a physical effect such as interception and inertial impaction, and therefore in order to achieve further improvement of the collection efficiency, basis weight is required to be increased, and a problem of increasing the pressure drop of the filter medium has remained.

Patent literature No. 2 proposes a filter including a nonwoven fabric of polyamideimide fibers formed of fibers having a fiber diameter of 0.001 to 1 micrometer and subjected to charging treatment (electret treatment). Patent literature No. 2 describes that collection efficiency can be remarkably improved by further applying the electret treatment to a filter medium formed of ultrafine fibers. However, examples of a method of the electret treatment include a method such as achievement of electret by corona discharge, and achievement of electret by collision of high-pressure water flow. However, the ultrafine fibers have low mechanical strength per one fiber, and therefore are damaged by corona discharge upon performing electret processing, and a problem of incapability of obtaining satisfactory collecting performance has remained. Further, the electret processing needs to be applied thereto after forming the sheet made of the nonwoven fabric, and therefore a problem of increased processing cost has remained.

### Citation List

### Patent Literature

Patent literature No. 1: JP 2005-218909 A.
Patent literature No. 2: JP 2008-682 A.

### Summary of Invention

### Technical Problem

An object of the invention is to solve the problems as described above, and to provide a filter medium that can be produced by a simpler process, and has high collection efficiency of dust and low pressure drop.

### Solution to Problem

The present inventors have diligently continued to conduct research for solving the problems described above. As a result, the present inventors have found that a fibrous structure including ultrafine fibers obtained by performing electrospinning of a specific material has excellent electrostatic propensity without applying electret treatment. Then, the present inventors have found that the fibrous structure is preferably used as a filter medium having high collection efficiency of dust and low pressure drop, and have completed the invention.

The invention has structure as described below.
Item 1. A filter medium, including ultrafine fibers subjected to electrospinning, wherein the ultrafine fibers have a plurality of ester bonds in a molecule.
Item 2 . The filter medium according to item 1, wherein a mean fiber diameter of the ultrafine fibers is in a range of 10 to 5, 000 nanometers.
Item 3. The filter medium according to item 1 or 2, wherein a glass transition temperature of the ultrafine fibers is 20°C or higher.
Item 4. The filter medium according to any one of items 1 to 3, wherein the ultrafine fibers are ultrafine fibers composed of polylactic acid, polyethylene terephthalate, polymethyl methacrylate or polycarbonate.
Item 5. The filter medium according to any one of items 1 to 4, wherein the ultrafine fibers contain a charge stabilizer.
Item 6. A production method for a fibrous structure for a filter medium, including: a step of preparing a spinning solution in which a resin having a plurality of ester bonds in a molecule is dispersed or dissolved in a solvent; and a step of obtaining the fibrous structure including ultrafine fibers by performing electrospinning of the spinning solution.
Item 7. The production method according to item 6, wherein a glass transition temperature of the resin having the plurality of ester bonds in the molecule is 20°C or higher.
Item 8. The production method according to item 6 or 7, wherein the resin having the plurality of ester bonds in the molecule is polylactic acid, polyethylene terephthalate, polymethyl methacrylate or polycarbonate.

### Advantageous Effects of Invention

The invention having the structure described above can provide a filter medium having high collection efficiency of dust and low pressure drop. In particular, the invention can provide the filter medium preferable for a household air filter such as a vacuum cleaner and an air cleaner, an air filter for building air conditioning, an industrial middle to high performance filter, and an HEPA filter or an ULPA filter for a cleanroom.

### Brief Description of Drawings

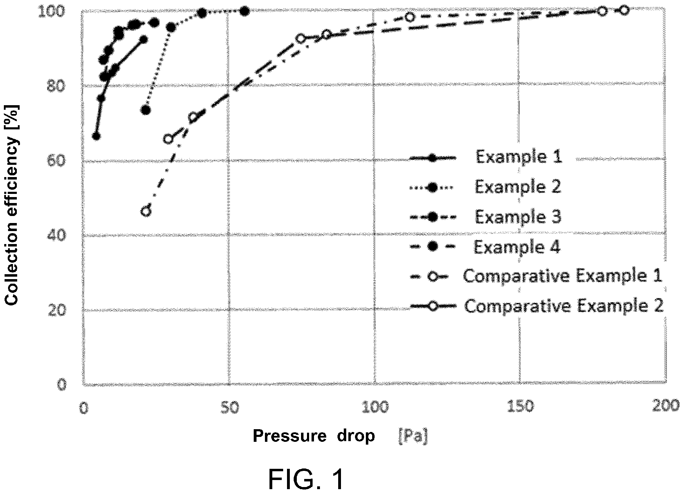

Figure 1 is a diagram showing a relationship between pressure drop and collection efficiency for filter media in Examples 1 to 4 and Comparative Examples 1 and 2.

### Description of Embodiments

The invention will be described in detail below.

A filter medium of the invention includes a filter medium including ultrafine fibers subjected to electrospinning, in which the ultrafine fibers have a plurality of ester bonds in a molecule. The ultrafine fibers obtained by performing electrospinning of a resin having the plurality of ester bonds in the molecule have excellent electrostatic propensity without applying the electret treatment, and the filter medium including the fibers can remarkably improve filter performance by physical collection by a dense matrix and electrical collection by excellent electrostatic propensity.

The resin forming the ultrafine fibers is not particularly limited as long as the resin has the plurality of ester bonds in the molecule, and preferably includes a repeating unit including at least one ester bond as a main component. Specific examples of such a resin include polylactic acid, polyglycolic acid, an aliphatic polyester resin such as polybutylene succinate and polycaprolactone, an aromatic polyester resin such as polyethylene terephthalate, polybutylene terephthalate and polytrimethylene terephthalate, an acrylate polymer such as polymethyl acrylate, a methacrylate polymer such as polymethyl methacrylate, and a copolymer thereof. The resin having the plurality of ester bonds in the molecule may be used in one kind, or in combination of two or more kinds . A mixing ratio thereof upon mixing such materials and using the mixture is not particularly limited, and can be appropriately set in view of spinnability or dispersibility required or physical properties of the ultrafine fibers obtained. The resin having the plurality of ester bonds in the molecule is not constrained by any particular theory, and is considered to have excellent electrostatic propensity and remain electrically charged by a synergistic effect between charge trap stability and orientation of polar groups in an electrospinning process. Such characteristics obtained by performing electrospinning of the resin having the plurality of ester bonds in the molecule are not predicted in the conventional technology, and are an unexpected new effect found according to the invention.

A weight average molecular weight of the resin forming the ultrafine fibers is not particularly limited, and is preferably in the range of 10,000 to 10,000,000, further preferably in the range of 50,000 to 5,000,000, and still further preferably 100,000 to 1,000,000. If the weight average molecular weight is 10,000 or more, the resin has excellent fiber-forming properties of the ultrafine fibers and a high glass transition temperature, and therefore such a case is preferred. If the weight average molecular weight is 10, 000, 000 or less, the resin has excellent solubility or thermoplasticity, and becomes easy in processing, and therefore such a case is preferred.

A glass transition temperature of the ultrafine fibers is not particularly limited, and is preferably 20°C or higher, further preferably 50°C or higher, and particularly preferably 100°C or higher from a viewpoint of stability of collection efficiency of the filter medium. If electrospinning is performed by using the resin having a glass transition temperature of 20°C or higher as a material, a nonwoven fabric excellent in electrostatic propensity is considered to be obtained, and the filter medium excellent in stability of collection efficiency is considered to be obtained. In addition, the glass transition temperature of the ultrafine fibers can be measured at a temperature at which a baseline changes when a heating rate is set to 10°C/min by using a differential scanning calorimeter, for example. Specific examples of the resin having the glass transition temperature of 20°C or more include polylactic acid, polyethylene terephthalate, polybutylene terephthalate, polyglycolic acid, polycarbonate and polymethyl methacrylate.

The ultrafine fibers may be crystalline or amorphous. When the fibers are crystalline, a degree of crystallinity is preferably 20% or more, further preferably 30% or more, and still further preferably 40% or more. If the degree of crystallinity is 20% or more, the stability of the collection efficiency of the filter medium can be improved, and simultaneously the mechanical strength of the ultrafine fibers is increased, and processability to a filter is improved, and therefore such a case is preferred. The degree of crystallinity of the ultrafine fibers can be obtained by dividing a total of areas of crystalline portions by a total of areas of the crystalline portions and amorphous portions, in a diffraction chart obtained by an X-ray diffraction method, and then multiplying the thus obtained value by 100, for example. When the ultrafine fibers are amorphous, the ultrafine fibers have flexibility, and break of the ultrafine fibers during pleat processing can be suppressed.

A mean fiber diameter of the ultrafine fibers is not particularly limited, and is preferably in the range of 10 to 5, 000 nanometers. If the mean fiber diameter is 10 nanometers or more, strength per one fiber is increased, and therefore performance deterioration by break during processing to the filter or the like can be suppressed, and clogging of the filter medium by dust can be reduced, and therefore such a case is preferred. Moreover, if the mean fiber diameter is 5,000 nanometers or less, a specific surface area of the fibers is increased, and the filter with low pressure drop and high collection efficiency can be obtained, and therefore such a case is preferred. From such viewpoints, the mean fiber diameter of the ultrafine fibers is further preferably in the range of 20 to 2,000 nanometers, and still further preferably in the range of 50 to 1,000 nanometers. A fiber diameter distribution is not particularly limited, and a CV value is preferably 50% or less, and further preferably 30% or less. When the fibers are used as the filter, if the CV value is 50% or less, the filter is excellent in a balance between the collection efficiency and the pressure drop, and if the CV value is 30% or less, the balance between both is further improved, and therefore such a case is preferred. Moreover, a length of the fibers subjected to electrospinning is not particularly limited, and the fibers are preferably continuous fibers from a viewpoint of fluff or the like.

Basis weight of the fibrous structure including the ultrafine fibers described above is not particularly limited, and is preferably in the range of 0.01 to 10 g/m². When a laminate of the ultrafine fibers is used as the filter medium, if the basis weight is 0.01 g/m² or more, satisfactory collection efficiency can be obtained, and therefore such a case is preferred, and if the basis weight is 10 g/m² or less, the pressure drop can be reduced, and therefore such a case is preferred. From such viewpoints, the basis weight of the fibrous structure of the ultrafine fibers is further preferably in the range of 0.05 to 8 g/m², and still further preferably in the range of 0.1 to 5 g/m². The fibrous structure including the ultrafine fibers according to the invention has excellent electrostatic propensity, and therefore high collection efficiency can be realized even if the fibers having low basis weight are used.

Initial collection efficiency of dust in the filter medium according to the invention is not particularly limited, and is preferably 60 % or more, further preferably 80% or more, and still further preferably 90% or more. Moreover, initial pressure drop is not particularly limited, and is preferably 200 Pa or less, and further preferably 100 Pa or less. Here, the initial collection efficiency and the initial pressure drop each are a measured value upon passing a particle size of 0.07 micrometer (count median diameter) and a particle concentration of 10 to 25 mg/m³) through the sample at a measuring flow rate of 5.3 cm/sec. The initial collection efficiency and the initial pressure drop can be adjusted by appropriately changing the mean fiber diameter and the basis weight of the ultrafine fibers. In particular, when the filter medium is used as an air filter for a vacuum cleaner, an air cleaner or building air conditioning, the initial collection efficiency and the initial pressure drop are preferably 60% or more and 60 Pa or less, further preferably 80% or more and 40 Pa or less, and still further preferably 90% or more and 25 Pa or less, respectively.

A maintenance rate of the collection efficiency of the filter medium according to the invention is not particularly limited, and is preferably 70% or more, further preferably 80% or more, and still further preferably 90% or more. Here, the maintenance rate of the collection efficiency is defined as a value obtained by dividing a value when the collection efficiency becomes the lowest by a value of the initial collection efficiency, in a dust load test, and then multiplying the obtained value by 100.

The ultrafine fibers may be arranged randomly, or may be arrayed one-dimensionally or two-dimensionally. When the ultrafine fibers are arranged randomly, characteristics such as mechanical strength are isotropically developed, and when the ultrafine fibers are arrayed one-dimensionally or two-dimensionally, various characteristics are anisotropically developed. Moreover, surface structure of the ultrafine fibers is not particularly limited, and may be smooth structure or uneven structure. A case of the smooth structure is preferred in view of increased fiber strength, and a case of the uneven structure is preferred in view of increased specific surface area of the fibers.

The filter medium of the invention is not particularly limited as long as the filter medium includes the ultrafine fibers described above, and may be laminated and united with another sheet-form raw material, or may be a laminate having two layers or three or more layers in which at least one layer selected from the group of a nonwoven fabric, a woven fabric, a net and a permeable film is laminated on one side or both sides of the layer including the ultrafine fibers. The fibers are processed into the laminate having two or more layers, thereby causing improvement in the mechanical strength of the filter medium, and the filter medium having excellent processability can be provided, and therefore such a case is preferred. When the nonwoven fabric, the woven fabric, the net or the permeable film is laminated on both sides of the layer including the ultrafine fibers, a layer of the ultrafine fibers is not exposed onto a surface, and thus the layer of the ultrafine fibers becomes hard to be broken, and therefore such a case is preferred.

The raw material of the nonwoven fabric, the woven fabric, the net or the permeable film to be laminated therewith is not particularly limited, and specific examples thereof include a polyolefin-based resin such as polyethylene and polypropylene, a polyester-based resin such as polyethylene terephthalate, polylactic acid and polybutylene succinate, a polyamide-based resin, polyurethane, a fluorine-based resin such as polyvinylidene fluoride and polytetrafluoroethylene, polysulfone, polyethersulfone and cellulose acetate. From viewpoints of peelability from the layer including the ultrafine fibers, processability, heat resistance and chemical resistance and the like, the raw material is preferably a polyolefin-based resin, a polyester-based resin or a polyamide-based resin, and further preferably a polyester-based resin. A configuration of the nonwoven fabric, the woven fabric, the net or the permeable film to be laminated is not particularly limited, and may be a single layer product composed of one kind, or a multilayer product composed of two or more kinds, and can be appropriately selected according to a function and an effect thereof.

A method of preparing the laminate of the ultrafine fibers is not particularly limited, and specific example thereof include a method of directly performing electrospinning of ultrafine fibers onto a nonwoven fabric, a woven fabric, a net or a permeable film, and a method of laminating a layer including ultrafine fibers obtained by electrospinning onto a nonwoven fabric, a woven fabric, a net or a permeable film and uniting the resulting material in a post process. A method of uniting the resulting material is not particularly limited, and a method such as thermocompression bonding by a heated flat roll or embossing roll, adhesion by a hot-melt agent or a chemical adhesive or thermo-bonding by circulating hot air or radiation heat can be adopted. From a viewpoint of suppressing deterioration of physical properties of the layer including the ultrafine fibers by uniting the resulting material, above all, heat treatment by circulating hot air or radiation heat is preferred. In the case of thermocompression bonding using the flat roll or the embossing roll, the laminate is damaged to a considerable extent, such as melting and causing film formation of the layer including the ultrafine fibers or occurrence of break in a peripheral part of an embossed point, and when the laminate is used as the filter medium, reduction of performance is easily caused, such as reduction of air permeability or liquid permeability by melting and film formation, and reduction of collection characteristics by break. Moreover, in the case of adhesion using the hot melt agent or the chemical adhesive, an inter-fiber space in the layer including the ultrafine fibers is buried by the component, and performance is easily reduced, or a use environment of the filter medium is restricted by elution of the component in several cases. On the other hand, when the resulting material is united by heat treatment using circulating hot air or radiant heat, almost no damage to the layer including the ultrafine fibers is caused, and the resulting material can be united with sufficient delamination strength, and therefore such a case is preferred. When the resulting material is united by heat treatment using circulating hot air or radiant heat, the nonwoven fabric formed of thermo-fusible conjugate fibers and the laminate are preferably used, although the resulting material is not particularly limited thereto. Specific examples of the thermo-fusible conjugate fibers include conjugate fibers in which a low melting point component and a high melting point component are conjugated. Specific examples of the high melting point component include polypropylene, polyethylene terephthalate, polybutylene terephthalate, polytrimethylene terephthalate, nylon 6, nylon 6, 6 and poly-L-lactic acid, and specific examples of the low melting point component include low density polyethylene, linear low density polyethylene, high density polyethylene, a polyethylene terephthalate copolymer, poly-DL-lactic acid, a polypropylene copolymer and polypropylene. A difference of melting points between the high-melting point component and the low-melting point component in the thermo-fusible conjugate fibers is not particularly limited. In order to extend thermo-fusion processing temperature width, the difference is preferably 15°C or higher, and further preferably 30°C or higher. A conjugation form is not particularly limited, and such a conjugation form can be adopted as a publicly-known concentric sheath-core type, an eccentric sheath-core type, a side-by-side type, a sea-island type and a radial type.

The fibrous structure including the ultrafine fibers is not particularly limited, in which the ultrafine fibers may be combined with other fiber material. Specific examples of a material of the fiber material to be combined therewith include a polymer material such as polyvinyl alcohol, polyethylene glycol, polyethylene oxide, polyvinyl pyrrolidone, polyethylene, polypropylene, polyamide, polyurethane, polystyrene, polysulfone, polyethersulfone, polyfluorovinylidene, polyacrylonitrile, polymethyl methacrylate, cellulose, a cellulose derivative, chitin, chitosan, collagen and a copolymer thereof, and an inorganic material such as alumina, silica, titania, zirconia and hydroxyapatite. A mean fiber diameter of the fiber material is not particularly limited, and may be comparable to or different from the mean fiber diameter of the ultrafine fibers of the invention. The material of the fiber material to be combined therewith or the fiber diameter can be appropriately selected according to the function and the effect. A method of combining the ultrafine fibers with other fiber material is not particularly limited, and specific examples thereof include a method of simultaneously performing electrospinning of ultrafine fibers and other fiber material, and a method of dispersing ultrafine fibers and other fiber materials in water or the like to make paper.

The filter medium of the invention may further be subjected to electret processing. If the electret processing is performed, performance of the filter medium including the ultrafine fibers can be further improved. Specific examples of an electret processing method include electret processing by corona discharge.

The filter medium of the invention may be subjected to antistatic finish, water-repellent finish, hydrophilic finish, antibacterial finish, ultraviolet absorption finish, near-infrared absorption finish and soil resistant finish according to a purpose, as long as advantageous effects of the invention are not significantly adversely affected.

### Electrospinning method

An electrospinning method means a method in which a spinning solution is jetted therefrom, and simultaneously an electric field is acted thereon to process the jetted spinning solution into fibers to obtain the fibers on a collector. Specific examples thereof include a method of extruding a spinning solution from a nozzle, and simultaneously acting an electric field thereon to cause spinning, a method of bubbling a spinning solution, and simultaneously acting an electric field thereon to cause spinning, and a method of leading a spinning solution onto a surface of a cylindrical electrode, and simultaneously acting an electric field thereon to cause spinning.

The spinning solution is not particularly limited as long as the solution has spinnability, and such a solution can be used as a material obtained by dispersing the resin into the solvent, a material obtained by dissolving the resin into the solvent, and a material obtained by melting the resin by heat or irradiation with laser.

Specific examples of the solvent in which the resin is dispersed or dissolved include water, methanol, ethanol, propanol, acetone, N,N-dimethylformamide, N,N-dimethylacetamide, dimethyl sulfoxide, N-methyl-2-pyrrolidone, toluene, xylene, pyridine, formic acid, acetic acid, tetrahydrofuran, dichloromethane, chloroform, 1,1,2,2-tetrachloethane, 1,1,1,3,3,3-hexafluoroisopropanol, trifluoroacetic acid and a mixture thereof. A mixing ratio when such materials are mixed and used is not particularly limited, and can be appropriately set in view of spinnability and dispersibility to be required and the physical properties of the fibers obtained.

For the purpose of improving stability of electrospinning or fiber-forming properties, a surfactant may be further incorporated into the spinning solution. Specific examples of the surfactant include an anionic surfactant such as dodecyl sodium sulfate, a cationic surfactant such as tetrabutylammonium bromide, a nonionic surfactant such as polyoxyethylene sorbitan monolaurate. A concentration of the surfactant is preferably in the range of 5% by weight or less based on the spinning solution. If the concentration is 5% by weight or less, an improvement in an effect matching use can be obtained, and therefore such a case is preferred. When weather resistance is improved and the resultant material is used as the filter, for the purpose of further improving electret performance or stabilizing the electrostatic propensity, at least one kind selected from the group of a hindered amine compound is preferably contained as a charge stabilizer. Specific examples of the hindered amine compound include poly[6-(1,1,3,3-tetramethylbutyl)imino-1,3,5-triazine-2,4-diyl) ((2 ,2,6,6-tetramethyl-4-piperidyl)imino)hexamethylene((2,2,6,6-tetram ethyl-4-piperidyl)imino)] (Chimassorb 944, made be BASF A.G.), a polycondensate of dimethyl succinate with 1-(2-hydroxyethyl)-4-hydroxy-2,2,6,6-tetramethylpiperidine (Tinuvin 622, made by BASF A.G.) and bis(1,2,2,6,6-pentamethyl-4-piperidyl)-2-n-butyl-2-(3,5-di-t-butyl -4-hydroxybenzyl)malonate (Tinuvin 144, made by BASF A.G.). A concentration of the charge stabilizer is not particularly limited, and is preferably in the range of 0.1 to 10% by weight based on the resin having the plurality of ester bonds in the molecule. If the concentration is 0.1% by weight or more, a charge charged in the ultrafine fibers can be stably preferably maintained for a long period of time, and if the concentration is 10% by weight or less, the effect matching the use can be obtained, and therefore such a case is preferred.

The spinning solution may contain any component other than the components described above as the component of the spinning solution within the range in which the advantageous effects of the invention are not adversely affected.

A method of preparing the spinning solution is not particularly limited, and specific examples thereof include a method such as stirring and ultrasonic treatment. Moreover, mixing order is not particularly limited, either, and the components may be mixed simultaneously or successively. A stirring time when the spinning solution is prepared by stirring is not particularly limited as long as the resin is uniformly dissolved or dispersed in the solvent, and for example, the resulting mixture may be stirred for about 1 to about 24 hours.

In order to obtain the fibers by electrospinning, viscosity of the spinning solution is prepared preferably to the range of 10 to 10,000 cP, and further preferably to the range of 50 to 8,000 cP. If the viscosity is 10 cP or more, spinnability for forming the fibers is obtained, and if the viscosity is 10,000 cP or less, the spinning solution is easily jetted. If the viscosity is in the range of 50 to 8,000 cP, good spinnability is obtained in a wide range of spinning conditions, and therefore such a case is further preferred. The viscosity of the spinning solution can be adjusted by appropriately changing molecular weight or a concentration of the resin, or the kind or the mixing ratio of the solvent.

With regard to a temperature of the spinning solution, the solution can be spun at room temperature, or may be spun by heating or cooling the solution. Specific examples of a method for jetting the spinning solution include a method for jetting a spinning solution filled in a syringe from a nozzle by using a pump. An inner diameter of the nozzle is not particularly limited, and is preferably in the range of 0.1 to 1.5 mm. An amount of jetting the spinning solution is not particularly limited, and is preferably 0.1 to 10 mL/hr.

A method of acting the electric field thereon is not particularly limited as long as the electric field can be formed between the nozzle and the collector. For example, a high voltage may be applied to the nozzle, and the collector may be grounded. A voltage to be applied thereto is not particularly limited as long as the fibers are formed, and is preferably in the range of 5 to 100 kV. Moreover, a distance between the nozzle and the collector is not particularly limited as long as the fibers are formed, and is preferably in the range of 5 to 50 cm. The collector only needs be able to collect the fibers spun, and the raw material, the shape or the like is not particularly limited. As the raw material of the collector, a conductive material such as metal can be preferably used. The shape of the collector is not particularly limited, and specific examples thereof include a flat plate shape, a shaft shape and a conveyer shape. If the collector has the flat plate shape, the fibrous structure can be collected in a sheet form, and if the collector has the shaft shape, the fibrous structure can be collected in a tube form. If the collector has the conveyer shape, the fibrous structure collected in the sheet form can be continuously produced.

### Examples

Examples described below are merely for illustrative purposes only. A scope of the invention is not limited to the present Examples.

Measuring methods and definitions of values of physical properties shown in Examples are described below.

### Mean fiber diameter

A surface of an ultrafine fibrous structure obtained by electrospinning was observed at a magnification of 5,000 to 30,000 by using a scanning electron microscope (SU-8000) made by Hitachi Ltd., and diameters of 50 fibers were measured by using image analysis software. A mean value of the fiber diameters of 50 fibers was taken as a mean fiber diameter.

### Filter performance

Pressure drop and collection efficiency when NaCl (particle size: 0.07 µm (count median diameter), particle concentration: 10 to 25 mg/m³) was passed through a sample at a flow rate of 5.3 cm/sec were measured by using Automated Filter Efficiency Detector (Model 8130) made by TSI Inc.

### Charging potential

A top and a bottom of a nonwoven fabric for a filter medium in which an ultrafine fibrous structure subjected to electrospinning was laminated on a nonwoven fabric made of polyethylene terephthalate were interposed between aluminum plates to remove surface charge. Subsequently, a surface on a side of the ultrafine fibrous structure on the nonwoven fabric for the filter medium, from which the surface charge was removed, was measured by Electrostatic Fieldmeter (FMX-003) made by Shimco Japan, Inc.

### Example 1

A spinning solution formed of 11 parts by weight of polylactic acid (6060D) made by NatureWorks LLC., 44.5 parts by weight of dimethyl formamide and 44.5 parts by weight of dichloromethane was prepared. Subsequently, the spinning solution was supplied to a nozzle having an inner diameter of 0.22 mm at 2.0 mL/hr by a syringe pump, and simultaneously a voltage of 32.5 kV was applied to the nozzle to perform electrospinning of ultrafine fibers composed of polylactic acid. A distance between the nozzle and a collector grounded was adjusted to 22.5 cm. Filter media different in basis weight of a fibrous structure obtained by ultrafine fibers composed of polylactic acid were prepared by changing a feed speed of a nonwoven fabric made of polyethylene terephthalate arranged between the nozzle and the collector.

A mean fiber diameter of the ultrafine fibers composed of polylactic acid was 300 nm.

### Example 2

A spinning solution formed of 15 parts by weight of polyethylene terephthalate made by Chung Shing Textile Co., Ltd., 42.5 parts by weight of trifluoroacetic acid and 42.5 parts by weight of dichloromethane was prepared. Subsequently, the spinning solution was supplied to a nozzle having an inner diameter of 0.22 mm at 1.0 mL/hr by a syringe pump, and simultaneously a voltage of 16 kV was applied to the nozzle to perform electrospinning of ultrafine fibers composed of polyethylene terephthalate. A distance between the nozzle and a collector grounded was adjusted to 20 cm. Filter media different in basis weight of a fibrous structure of the ultrafine fibers composed of polyethylene terephthalate were prepared by changing a feed speed of a nonwoven fabric made of polyethylene terephthalate arranged between the nozzle and the collector.

A mean fiber diameter of the ultrafine fibers composed of polyethylene terephthalate was 860 nm.

### Example 3

A spinning solution formed of 15 parts by weight of polycarbonate (AC3800) made by Formosa Chemicals & Fiber Corporation, 42.5 parts by weight of 1,1,2,2-tetrachloroethane, 42.5 parts by weight of dichloromethane and 0.05 part by weight of tetrabutylammonium bromide was prepared. Subsequently, the spinning solution was supplied to a nozzle having an inner diameter of 0.22 mm at 2.0 mL/hr by a syringe pump, and simultaneously a voltage of 25 kV was applied to the nozzle to perform electrospinning of ultrafine fibers composed of polycarbonate. A distance between the nozzle and a collector grounded was adjusted to 20 cm. Filter media different in basis weight of a fibrous structure of the ultrafine fibers composed of polycarbonate were prepared by changing a feed speed of a nonwoven fabric made of polyethylene terephthalate arranged between the nozzle and the collector.

A mean fiber diameter of the ultrafine fibers composed of polycarbonate was 830 nm.

### Example 4

A spinning solution formed of 12 parts by weight of polymethyl methacrylate made by Sigma-Aldrich Japan K.K., 88 parts by weight of N,N-dimethylformamide and 0.05 part by weight of sodium dodecylsulfate was prepared. Subsequently, the spinning solution was supplied to a nozzle having an inner diameter of 0.22 mm at 2.0 mL/hr by a syringe pump, and simultaneously a voltage of 30 kV was applied to the nozzle to perform electrospinning of ultrafine fibers composed of polymethyl methacrylate. A distance between the nozzle and a collector grounded was adjusted to 20 cm. Filter media different in basis weight of a fibrous structure of the ultrafine fibers composed of polymethyl methacrylate were prepared by changing a feed speed of a nonwoven fabric made of polyethylene terephthalate arranged between the nozzle and the collector.

A mean fiber diameter of the ultrafine fibers composed of polymethyl methacrylate was 820 nanometers.

### Comparative Example 1

A spinning solution formed of 20 parts by weight of polyvinylidene fluoride (Kynar 3120-50) made by ARKEMA K.K., 48 parts by weight of dimethylacetamide and 32 parts by weight of acetone was prepared. Subsequently, the spinning solution was supplied to a nozzle having an inner diameter of 0.22 mm at 1.0 mL/hr by a syringe pump, and a voltage of 25 kV was applied to the nozzle to perform electrospinning of ultrafine fibers composed of polyvinylidene fluoride. A distance between the nozzle and a collector grounded was adjusted to 20 cm. Filter media different in basis weight of a fibrous structure of the ultrafine fibers composed of polyvinylidene were prepared by changing a feed speed of a nonwoven fabric made of polyethylene terephthalate arranged between the nozzle and the collector.

A mean fiber diameter of the ultrafine fibers composed of polyvinylidene fluoride was 250 nm.

### Comparative Example 2

A spinning solution formed of 10 parts by weight of nylon 6,6 made by Sigma-Aldrich Japan K.K., 54 parts by weight of formic acid and 36 parts by weight of acetic acid was prepared. Subsequently, the spinning solution was supplied to a nozzle having an inner diameter of 0.22 mm at 0.6 mL/hr by a syringe pump, and simultaneously a voltage of 35 kV was applied to the nozzle to perform electrospinning of ultrafine fibers composed of nylon 6,6. A distance between the nozzle and a collector grounded was adjusted to 15 cm. Filter media different in basis weight of a fibrous structure of the ultrafine fibers composed of nylon 6,6 were prepared by changing a feed speed of a nonwoven fabric made of polyethylene terephthalate arranged between the nozzle and the collector.

A mean fiber diameter of the ultrafine fibers composed of nylon 6,6 was 200 nm.

Table 1 shows, on the filter media in Examples 1 to 4 and Comparative Examples 1 and 2, a material, a glass transition temperature, and a mean fiber diameter of the ultrafine fibers, and basis weight and filter performance. In addition, as the glass transition temperature, a typical value of each material is shown.

**Table 1**

| | Material of ultrafine fibers | Glass transition temperature | Mean fiber diameter | Basis weight | Pressure drop | Collection efficiency | Charging potential |
|---|---|---|---|---|---|---|---|
| | | (°C) | (nm) | (g/m²) | (Pa) | (%) | (kV) |
| Example 1 | Polylactic acid | 60 | 300 | 0.9 | 20.9 | 92.43 | 0.25 |
| | | | | 0.6 | 11.3 | 84.80 | 0.18 |
| | | | | 0.5 | 10.1 | 83.38 | 0.15 |
| | | | | 0.3 | 6.5 | 76.75 | 0.10 |
| | | | | 0.2 | 4.6 | 66.53 | 0.05 |
| Example 2 | Polyethylene terephthalate | 80 | 860 | 3.3 | 56.0 | 99.94 | 0.12 |
| | | | | 2.2 | 41.1 | 99.44 | 0.04 |
| | | | | 1.7 | 30.7 | 95.68 | 0.02 |
| | | | | 1.1 | 21.5 | 73.60 | 0.01 |
| Example 3 | Polycarbonate | 145 | 830 | 2.3 | 24.8 | 96.98 | 0.38 |
| | | | | 1.7 | 18.5 | 96.52 | 0.36 |
| | | | | 0.9 | 12.6 | 94.75 | 0.27 |
| | | | | 0.3 | 7.4 | 87.05 | 0.22 |
| Example 4 | Polymethyl methacrylate | 105 | 820 | 1.5 | 17.5 | 96.30 | 0.31 |
| | | | | 1.0 | 12.7 | 93.64 | 0.30 |
| | | | | 0.6 | 9.0 | 89.56 | 0.23 |
| | | | | 0.4 | 7.6 | 82.45 | 0.18 |
| Comparative Example 1 | Polyvinylidene fluoride | -40 | 250 | 0.5 | 21.7 | 46.45 | 0.00 |
| | | | | 0.9 | 38.1 | 71.65 | 0.00 |
| | | | | 1.8 | 84.0 | 93.57 | 0.00 |
| | | | | 2.8 | 112.7 | 98.09 | 0.00 |
| | | | | 3.8 | 186.3 | 99.58 | 0.00 |
| Comparative Example 2 | Nylon 6,6 | 50 | 200 | 0.3 | 29.5 | 65.60 | 0.00 |
| | | | | 0.6 | 75.2 | 92.49 | 0.00 |
| | | | | 1.1 | 179.0 | 99.47 | 0.00 |

Table 1 shows that the filter media in Examples 1 to 4 have electrostatic propensity, and satisfy both higher collection efficiency and lower pressure drop in comparison with the filter media in Comparative Examples 1 and 2.

Figure 1 shows a relationship between pressure drop and collection efficiency on the filter media in Examples 1 to 4 and Comparative Examples 1 and 2.

Table 1 and Figure 1 show that the filter medium of the invention can be produced by using the same method as in conventional ultrafine fibers, and the pressure drop can be decreased and the collection efficiency can be increased in comparison with the conventional filter medium.

### Example 5

A filter medium having 0.5 g/m² in basis weight of a fibrous structure of ultrafine fibers composed of polylactic acid was prepared in the same manner as in Example 1 except that 0.11 part by weight of Chimassorb 944 was added to a spinning solution as a charge stabilizer.

Table 2 shows a change of collection efficiency when the filter media obtained in Example 1 (0.5 g/m² in the basis weight of the ultrafine fibers) and Example 5 were allowed to stand for 90 days under a general environment (room temperature: 15 to 40°C, relative humidity: 30 to 90%) .

As shown in Table 2, in the filter medium including the charge stabilizer, reduction of the collection efficiency was small, and a charged electric charge was able to be stably maintained for a long period of time.

**Table 2**

| | Initial collection efficiency | Collection efficiency after 90 days |
|---|---|---|
| | (%) | (%) |
| Example 1 | 83.38 | 48.57 |
| Example 5 | 88.53 | 83.38 |

### Industrial Applicability

A filter medium including ultrafine fibers subjected to electrospinning of a resin having a plurality of ester bonds in a molecule according to the invention has high collection efficiency of dust and low pressure drop, and therefore can be preferably used as a filter medium for an air filter or a filter medium for a liquid filter. In particular, the invention can provide a filter medium preferable for a household air filter such as a vacuum cleaner and an air cleaner, an air filter for building air conditioning, an industrial middle or high performance filter, or an HEPA filters or ULPA filter for a cleanroom.

## Claims

1. A filter medium, **characterized in that** the filter medium including ultrafine fibers subjected to electrospinning, wherein the ultrafine fibers have a plurality of ester bonds in a molecule.

2. The filter medium according to claim 1, wherein a mean fiber diameter of the ultrafine fibers is in a range of 10 to 5,000 nanometers.

3. The filter medium according to claim 1 or 2, wherein a glass transition temperature of the ultrafine fibers is 20°C or higher.

4. The filter medium according to any one of claims 1 to 3, wherein the ultrafine fibers are ultrafine fibers composed of polylactic acid, polyethylene terephthalate, polymethyl methacrylate or polycarbonate.

5. The filter medium according to any one of claims 1 to 4, wherein the ultrafine fibers contain a charge stabilizer.

6. A production method for a fibrous structure for a filter medium, including:
a step of preparing a spinning solution in which a resin having a plurality of ester bonds in a molecule is dispersed or dissolved in a solvent; and
a step of obtaining the fibrous structure including ultrafine fibers by performing electrospinning of the spinning solution.

7. The production method according to claim 6, wherein a glass transition temperature of the resin having the plurality of ester bonds in the molecule is 20°C or higher.

8. The production method according to claim 6 or 7, wherein the resin having the plurality of ester bonds in the molecule is polylactic acid, polyethylene terephthalate, polymethyl methacrylate or polycarbonate.
